# EUROPÄISCHE PATENTSCHRIFT

(11) **EP 3 064 879 B1**
(45) Veröffentlichungstag und Bekanntmachung des Hinweises auf die Patenterteilung: **08.07.2020**
(21) Anmeldenummer: 16157820.8
(22) Anmeldetag: 29.02.2016
(51) Int. Cl.: F28D 1/03

(54) **HEIZKÖRPERVORRICHTUNG MIT KREUZDURCHSTRÖMUNG**
RADIATOR DEVICE WITH CROSS-FLOW
DISPOSITIF DE RADIATEUR A ECOULEMENT CROISE

(30) Priorität: 02.03.2015 DE 102015002555; 07.05.2015 DE 102015208479
(43) Veröffentlichungstag der Anmeldung: 07.09.2016
(73) Patentinhaber: Balg, Hans-Alfred, 50321 Brühl (DE)
(72) Erfinder: Balg, Hans-Alfred, 50321 Brühl (DE)
(74) Vertreter: dompatent von Kreisler Selting Werner - Partnerschaft von Patent- und Rechtsanwälten mbB

(56) Entgegenhaltungen:
- EP-A2- 0 397 487
- DE-A1- 1 778 598
- DE-A1- 19 619 888
- DE-B- 1 089 534
- DE-U1-202014 105 570
- GB-A- 1 085 161
- NL-A- 7 315 270

## Beschreibung

Die Erfindung betrifft eine Heizkörpervorrichtung mit mindestens einem Heizelement, welches aus zwei gegeneinander gesetzten Heizelement-Halbschalen gebildet wird.

Jede Halbschale weist dabei mehrere, langgestreckte, parallel zueinander angeordnete, Rillen bildende Vertiefungen auf. Die beiden Halbschalen werden herkömmlicherweise derart aufeinander gesetzt, dass jede rillenartige Vertiefung der einen Halbschale an eine entsprechende rillenartige Vertiefung der anderen Halbschale grenzt. Die beiden aneinander grenzenden rillenartigen Vertiefungen der beiden Halbschalen bilden dann im zusammengefügten Zustand der Halbschalen einen langgestreckten Fluidströmungskanal für das Heizmedium.

Im zusammengefügten Zustand weist also jedes Heizelement mehrere langgestreckte, parallel zueinander und nebeneinander angeordnete Strömungskanäle auf, durch die das Heizelement von dem Heizmedium durchströmt wird. An ihrem einen Ende sind die Strömungskanäle mit einem Heizungsvorlauf verbunden, aus dem die Strömungskanäle mit warmem Heizmedium gespeist werden. An ihrem gegenüberliegenden Ende sind die Strömungskanäle mit einem Heizungsrücklauf verbunden, dem das abgekühlte Heizmedium aus den Strömungskanälen wieder zugeführt wird.

Typischerweise ist zwischen dem Vorlaufanschluss und dem einen Ende der Strömungskanäle eine Wassertasche in dem Heizelement gebildet, von der sämtliche Strömungskanäle abzweigen. Die Wassertasche kann ähnlich wie die Strömungskanäle durch rillenartige, langgestreckte Vertiefungen in den beiden Halbschalen gebildet werden. Jede Halbschale hat dabei genau eine rillenartige Vertiefung für die Wassertasche. Von den rillenartigen Vertiefungen der Wassertasche zweigen die rillenartigen Vertiefungen für die Stömungskanäle ab. Zwischen dem anderen Ende der Strömungskanäle und dem Rücklaufanschluss kann in dem Heizelement eine entsprechende Wassertasche gebildet sein, in die sämtliche Strömungskanäle münden.

Derartige Heizkörper werden in der Nähe einer Raumwand eines Hauses platziert und mit einem Heizungsvorlauf und einem Heizungsrücklauf verbunden. Aus dem Heizungsvorlauf strömt Heizmedium, typischerweise Wasser, in jedes Heizelement. Der Vorlaufanschluss der Heizelemente ist in deren oberem Bereich vorgesehen, so dass die Heizelemente von dem Heizmedium von oben nach unten durchströmt werden. Im unteren Bereich weist jedes Heizelement einen Rücklaufanschluss auf, um das Heizmedium nach Durchströmen des Heizelements dem Heizungsrücklauf zuzuführen. Ein raumseitiges und ein wandseitiges Heizelement sind meist parallel zueinander angeordnet und jeweils mit demselben Vorlauf und Rücklauf verbunden. Die beiden Heizelemente werden parallel von dem Heizmedium durchströmt.

Es ist bekannt, derartige Heizkörper mit vergleichsweise hohen Vorlauftemperaturen von 50 °C oder mehr zu betreiben. Das dem Rücklauf zugeführte Heizmedium ist nach Durchströmen des Heizkörpers um etwa 10 K auf etwa 40 °C abgekühlt. Dabei zeigen Untersuchungen, dass das Heizmedium bei Durchströmen der Heizelemente von oben nach unten keinem gleichmäßigen Temperaturabfall unterliegt. Vielmehr ist der Temperaturabfall pro Längeneinheit im unteren Bereich des Heizkörpers größer als im oberen Bereich. Dies führt dazu, dass beim Betrieb eines derartigen Heizkörpers mit geringeren Vorlauftemperaturen eine ausreichende Wärmeabgabe nur im oberen Bereich des Heizkörpers erfolgt. Im unteren Bereich des Heizkörpers ist das Heizmedium bereits soweit abgekühlt, dass nur noch eine kaum spürbare Wärmeabgabe stattfindet.

EP 0 176 997 A2 beschreibt einen Heizkörper mit zwei aneinander gesetzten Halbschalen, von denen die erste Halbschale nur vertikale Strömungskanäle aufweist, während die zweite Halbschale einander kreuzende vertikale und horizontale Strömungskanäle aufweist. Dadurch soll der Wärmeübertrag auf ein außenseitig mit der zweiten Halbschale verbundenes Konvektionsleitblech verbessert werden. Mit dem standardisierten Herstellungsverfahren für heutzutage eingesetzte Heizkörpervorrichtungen und deren Halbschalen kann der in dieser Druckschrift beschriebene Heizkörper nicht hergestellt werden. Vielmehr ist die Herstellung technisch aufwändig und teuer.

EP 0 397 487 A2 beschreibt einen Wärmetauscher mit einander kreuzenden Fluidkanälen. Das Dokument zeigt eine Heizkörpervorrichtung mit den Merkmalen des Oberbegriffs von Anspruch 1. Der Erfindung liegt die Aufgabe zugrunde, eine einfach herzustellende Heizkörpervorrichtung mit verbessertem Energieübertrag bei geringen Vorlauftemperaturen bereitzustellen.

Während bei den bekannten, heutzutage üblichen Heizkörpervorrichtungen die beiden Heizelement-Halbschalen in gleicher Ausrichtung gegeneinander gesetzt werden und miteinander fest verbunden werden, so dass die Vertiefungen der einen Halbschale für die Strömungskanäle gleich ausgerichtet sind wie die Vertiefungen der anderen Halbschale für die Strömungskanäle, werden die beiden Halbschalen erfindungsgemäß um 90 Grad gegeneinander verdreht, das heißt quer zueinander aneinander gesetzt und miteinander fest verbunden. Dadurch verlaufen die rillenartigen Vertiefungen der einen Halbschale für die Strömungskanäle quer zu den rillenartigen Vertiefungen der anderen Halbschale für die Strömungskanäle. Im zusammengefügten Zustand der beiden Halbschalen des Heizelements werden dadurch Strömungskanäle für das Heizmedium gebildet, die einander kreuzen und das Heizelement nach Art eines Gitters durchziehen. Entscheidend ist, dass die Strömungskanäle einer Halbschale einander nicht kreuzen, was für beide Halbschalen gilt. Die Gitterstruktur der Strömungskanäle für die Kreuzdurchströmung wird also erst durch das Zusammenfügen der beiden Halbschalen zu einem Heizelement ermöglicht.

Zwischen benachbarten Strömungskanälen einer Halbschale ist ein direkter Übertrag verhindert und wird erst indirekt über die quer verlaufenden Strömungskanäle der anderen Halbschale ermöglicht. Mit direktem Übertrag von Heizmedium ist dabei ein Übertrag gemeint, bei dem das Heizmedium den von der betreffenden Halbschale gebildeten Strömungsbereich für das Heizmedium nicht verlässt. Ein solcher direkter Übertrag zwischen benachbarten Strömungskanälen einer Halbschale wird dadurch verhindert, dass zwischen den Strömungskanälen langgestreckte parallel zueinander angeordnete erhöhte Bereiche ausgebildet sind, die in ihrer Länge den Strömungskanälen entsprechen und eine Barriere für das Heizmedium über die gesamte Länge der Strömungskanäle bilden. Diese Art von Halbschalen entspricht den derzeit standardmäßig hergestellten Halbschalen. Die Kreuzdurchströmung wird also nur dadurch ermöglicht, dass standardmäßig hergestellte Halbschalen um 90 Grad gegeneinander verdreht miteinander verbunden werden. Dadurch wird auf technisch einfache und kostengünstige Weise die Herstellung eines Heizkörpers mit Kreuzdurchströmung ermöglicht.

Im montierten Zustand der Heizkörpervorrichtung sind die durch die eine Halbschale gebildeten Strömungskanäle typischerweise ausschließlich vertikal und die Strömungskanäle der anderen Halbschale ausschließlich horizontal ausgerichtet. Die vertikal angeordneten Strömungskanäle werden auf herkömmliche Weise von oben nach unten von dem Heizmedium durchströmt. Die horizontalen Strömungskanäle der anderen Halbschale werden waagerecht von einer Seite zur anderen, das heißt von rechts nach links oder von links nach rechts, durchströmt. An den Kreuzungspunkten der Strömungskanäle vermischt sich das Heizmedium eines vertikalen Strömungskanals mit dem Heizmedium eines horizontalen Strömungskanals.

Dadurch wird beispielsweise bereits abgekühltes Heizmedium aus einem vertikalen Strömungskanal mit Heizmedium höherer Temperatur eines horizontalen Strömungskanals vermischt und erwärmt. Im Ergebnis ergibt sich eine gleichmäßigere Wärmeverteilung des Heizmediums im Heizelement. Die erfindungsgemäße Heizkörpervorrichtung bietet also insbesondere den entscheidenden Vorteil, einen Raum mit geringeren Vorlauftemperaturen als bei herkömmlichen Heizkörpern zu beheizen.

Bei einer vorteilhaften Weiterbildung der Erfindung sind die beiden gegeneinander gelegten und um 90 Grad gegeneinander verdrehten Heizelement-Halbschalen jeweils mit mindestens einer rillenartigen Vertiefung für mindestens eine Wassertasche versehen, von der die quer zu dieser Vertiefung angeordneten Strömungskanäle abzweigen. Im zusammengefügten Zustand der beiden Halbschalen ergibt sich also ein Heizelement mit einer entlang eines ersten, zum Beispiel oberen, Randes verlaufenden Wassertasche, von der Strömungskanäle abzweigen, und mit einer entlang eines an den ersten Rand angrenzenden zweiten, zum Beispiel seitlichen (rechten oder linken) Randes verlaufenden zweiten Wassertasche, von der die anderen Strömungskanäle abzweigen.

Bei den Wassertaschen handelt es sich im Sinne der vorliegenden Definition nicht um Strömungskanäle. Die Wassertaschen dienen primär dazu, den Strömungskanälen Heizmedium zuzuführen oder Heizmedium aus den Strömungskanälen aufzunehmen. Die Strömungskanäle hingegen dienen primär zur Durchströmung des Heizelements mit Heizmedium, um einen Wärmeübertrag von dem Heizmedium auf das Heizelement und die angrenzende Raumluft zu erzielen. Während die Strömungskanäle das Heizelement von einer Seite zur gegenüberliegenden Seite durchziehen, sind die Wassertaschen im Randbereich des Heizelements angeordnet und mit den äußeren Enden der Strömungskanäle verbunden. Während die Strömungskanäle benachbarter Halbschalen einander kreuzen, ist ein Kreuzen der Wassertaschen benachbarter Heizelemente nicht vorgesehen.

Die beiden Wassertaschen sind vorzugsweise mit einem gemeinsamen Vorlaufanschluss versehen, um aus demselben Heizungsvorlauf gespeist zu werden. Das Heizmedium aus dem Heizungsvorlauf gelangt zugleich in beide Wassertaschen und breitet sich in diesen aus. Von den Wassertaschen durchströmt das Heizmedium dann die jeweiligen Strömungskanäle der betreffenden Halbschale. Dadurch wird eine besonders gleichmäßige, annähernd homogene Wärmeverteilung des Heizelements ermöglicht. Vorzugsweise ist jede Halbschale mit einer ersten Wassertasche für den Heizungsvorlauf in Form einer rillenartigen Vertiefung und mit einer zweiten Wassertasche für den Heizungsrücklauf in Form einer rillenartigen Vertiefung versehen. Die beiden Wassertaschen sind dann auf einander gegenüberliegenden Seiten der Strömungskanäle mit den Enden der Strömungskanäle verbunden, so dass die eine Wassertasche den Strömungskanälen das Heizmedium aus dem Heizungsvorlauf zuführt und die andere Wassertasche das Heizmedium aus den Strömungskanälen aufnimmt und dem Heizungsrücklauf zuführt.

Bei einer bevorzugten Variante ist das Thermostatventil nicht wie bei den herkömmlichen Heizkörpern am oberen Ende des Heizelements angeordnet und mit diesem verbunden, sondern auf einer Höhe unterhalb des oberen Randes angeordnet. Dadurch kann ein das Thermostatventil schließender und den Heizungszulauf blockierender Wärmestau vermieden werden. Ein solcher Wärmestau kann bei einem in eine Wandnische eingebauten Heizkörper in dessen oberem Bereich entstehen. Wenn das Thermostatventil im oberen Bereich des Heizkörpers angeordnet ist, schließt dieses frühzeitig aufgrund des Wärmestaus und stoppt den weiteren Wärmetransport. Der Temperaturunterscheid zwischen der am Thermostatventil eingestellten Raumtemperatur und der Stauwärme in einer Wandnische kann bis zu 10 Grad betragen. Nutzer umgehen dieses Problem meist durch Einstellen einer überhöhten Raumsolltemperatur am Thermostat von zum Beispiel 26 - 28 Grad Celsius, um eine gewünschte Wohnraumtemperatur im Bereich von 20 - 22 Grad zu erhalten. Im Ergebnis führt dies zu einem erhöhten Energieaufwand.

Wenn das Thermostatventil weiter unten angeordnet ist, zum Beispiel auf etwa 40 - 60 Prozent der Höhendifferenz zwischen dem oberen und dem unteren Rand des Heizkörpers bzw. zwischen der oberen, mit dem Vorlauf verbundenen Wassertasche und der unteren, mit dem Rücklauf verbundenen Wassertasche, kann ein solcher Wärmestau vermieden werden. Das Thermostatventil kann beispielsweise mit einer seitlichen, vertikalen Wassertasche in Fluidverbindung stehen und über diese indirekt mit der oberen, horizontalen Wassertasche.

Der Vorlaufanschluss kann an herkömmliche, bereits bestehende Anschlussmaße angeschlossen werden und zum Beispiel mit einer verdeckten Vorlaufzufuhr innerhalb des Heizkörpers an der seitlichen Heizwand nach unten bis auf die Höhe des Thermostatventils geführt werden und dort über die Ventilgarnitur mit den Heizwänden verbunden werden. Der Thermostat sitzt dann nicht, wie herkömmlicherweise, im oberen Bereich einer Wandnische, sondern vielmehr auf einer mittleren Höhe, wo der Thermostat besser und genauer auf die Raumwärme reagieren und wirken kann.

Der erfindungsgemäße Heizkörper bietet den besonderen Vorteil, dass auch mit geringen Vorlauftemperaturen, die mit Hilfe regenerativer Energien oder Wärmepumpen erzeugt werden, ein gleichmäßiger und zum Heizen eines Raumes ausreichender Wärmeübertrag stattfindet. Herkömmliche Heizkörper benötigen hingegen Vorlauftemperaturen von mehr als 40 °C und möglichst von mehr als 50 °C. Insbesondere ist der erfindungsgemäße Heizkörper in der Lage, einen Raum mit Vorlauftemperaturen von mehr als 50 °C und von weniger als 30 °C zu heizen.

Der erfindungsgemäße Heizkörper kann insbesondere als Flachheizkörper für die Beheizung einer Wohnfläche eingesetzt werden, wobei der Flachheizkörper als Fertigheizkörper zur Verfügung gestellt werden kann, der vor dem Einbau als fertig vorproduzierte Einheit zur Verfügung gestellt wird. Herkömmlicherweise werden derartige Flachheizkörper als Ventilheizkörper mit Anschluss von unten und vormontierter Ventil-Garnitur (Thermostatventil) sowie verdeckter Vorlaufzufuhr oder als Kompaktheizkörper für den seitlichen Anschluss zur Verfügung gestellt. Die Heizflächen werden herkömmlicherweise mit Systemtemperaturen von 70°C/55°C (Vorlauftemperatur/Rücklauftemperatur) oder 55°C/45°C angeboten. Für den Einsatz niedrigerer Vorlauftemperaturen, ähnlich einer Fußbodenheizung, sind die herkömmlichen Flachheizkörper nicht geeignet, weil nicht die ausreichende Wärme über die Heizwand und deren Oberfläche an den Raum abgegeben werden kann. Das ist insbesondere darin begründet, dass der Temperaturabfall des Heizkörpers aufgrund der vertikalen Wasserdurchströmung zwischen dem oberen und unteren Rand des Heizkörpers hoch ist. Für den Betrieb mit niedrigeren Vorlauftemperaturen wäre ein geringerer Temperaturabfall erforderlich.

Herkömmlicherweise werden ausgehend von der oberen Wassertasche abzweigende vertikale und parallel zueinander angeordnete Wasserkanäle hin zu der unteren Wassertasche und in diese mündend geführt, von wo aus das Heizmedium über den Rücklauf abgeführt wird. Erfindungsgemäß erfolgt zusätzlich zu der herkömmlichen Durchströmung des Heizkörpers von oben nach unten eine seitliche Durchströmung zum Beispiel durch horizontale Strömungskanäle, die aus einer seitlichen Wassertasche münden und parallel zueinander horizontal durch den Heizkörper bis hin zu der Rücklaufwassertasche auf der anderen Seite des Heizkörpers geführt werden und in die Rücklaufwassertasche münden. Die vertikalen Strömungskanäle kreuzen dadurch die horizontalen Strömungskanäle. An den Kreuzungspunkten dieser gitterartigen Strömungskanalstruktur vermischt sich das Heizmedium der vertikalen Strömungskanäle mit denjenigen in den horizontalen Strömungskanälen, wodurch der Temperaturunterschied des Heizkörpers in vertikaler Richtung reduziert wird. Dies ermöglicht gerade dem Einsatz herkömmlich aus gepressten Halbschalen gefertigter Heizkörper für geringere Vorlauftemperaturen. Während bei herkömmlichen Heizkörpern die Temperaturdifferenz in Vertikalrichtung circa 7,5°C beträgt, kann diese mit dem erfindungsgemäßen Heizkörper auf circa 2 - 3°C reduziert werden. Die erfindungsgemäße Gitterstruktur der Strömungskanäle kann auch als wabenförmige Struktur bezeichnet werden.

Die beiden Heizkörper-Halbschalen können auf herkömmliche Weise durch Punktschweißung miteinander verbunden werden. Die Schweißpunkte werden dabei zwischen den einander berührenden Abschnitten der beiden Halbschalen gesetzt, während die rillenartigen Vertiefungen zueinander beabstandet sind, so dass im Bereich der Vertiefungen das Heizmedium in den zwischen den Halbschalen gebildeten Strömungskanälen das Heizelement durchströmen kann. Die beiden Halbschalen können mit demselben Fertigungsprozess zum Beispiel durch identisches Pressen und/oder Stanzen hergestellt werden und werden anschließend nicht wie herkömmlicherweise mit gleicher Ausrichtung der Strömungskanäle der beiden Halbschalen aneinander gesetzt, sondern vielmehr mit um 90 Grad gegeneinander verdrehter Ausrichtung. Dies kann erreicht werden, in dem die eine Halbschale um 90 Grad gegenüber der anderen Halbschale verdreht wird. Besonders vorteilhaft ist diese Art der Herstellung für in Draufsicht quadratische Halbschalen.

Mit Hilfe der erfindungsgemäß verringerten Temperaturdifferenz in Vertikalrichtung des Heizkörpers von circa 2 - 3 Grad Celsius kann dieser mit Systemtemperaturen von 35 Grad Celsius/32 Grad Celsius (Vorlauftemperatur/Rücklauftemperatur) betrieben werden und insbesondere im Kombinationsbetrieb mit einer Fußbodenheizung eingesetzt werden. Der Brennwertnutzen einer den erfindungsgemäßen Heizkörper betreibenden Heizung ist verbessert und der Energiebedarf der Heizungsanlage verringert. Die Energiekosten können um bis zu 40 Prozent gesenkt werden.

Durch Verdrehen einer der beiden Halbschalen gegenüber der anderen Halbschale um 90 Grad wird eine Zufuhr horizontal ausgerichtete Wassertasche zu einer vertikal ausgerichteten Wassertasche am seitlichen Rand des Heizkörpers und gestattet einen individuell variabel zu positionierenden Anschluss des Vorlaufs und des Rücklaufs.

Vorzugsweise wird der Heizkörper derart in einem Raum angeordnet, dass die Halbschale mit den horizontal geführten Strömungskanälen zu der Raumseite hin weist, während die Halbschale mit den vertikal geführten Strömungskanälen zur Wandseite weist. Dadurch wird eine optisch gefälligere Wirkung gegenüber den herkömmlichen Heizflächen mit vertikaler Führung der Strömungskanäle erzielt.

Bei einer besonders bevorzugten Variante weist der Heizkörper zwei Heizelemente auf, die jeweils aus zwei Halbschalen gebildet sind. Die innenseitig einander gegenüberliegenden Halbschalen verschiedener Heizelemente weisen dabei die vertikalen Strömungskanäle auf, wobei die vertikal geführten Strömungskanäle der inneren Halbschalen durch vertikal geführte Konvektionsleitbleche thermisch miteinander verbunden sind. Dadurch wird ein vertikaler Luftstrom durch Konvektion erzeugt. Entsprechend weisen dann die beiden außenseitigen Halbschalen, die jeweils die Außenseiten des Heizkörpers bilden (Raumseite und Wandseite) die horizontal verlaufenden Strömungskanäle auf. Dabei ergibt sich eine optisch besonders gefällige Wirkung des Heizkörpers nach außen. Aufgrund der gitterartigen Führung des Heizmediums (Kreuzdurchströmung) wird im Vergleich zu einem herkömmlichen Heizkörper bei gleicher Menge von Heizmedium die Wärmeübertragungsfläche je nach Größe des Heizkörpers um circa 15% - 20% vergrößert und dadurch die Leistungsfähigkeit des Heizkörpers erhöht. In Verbindung mit den Konvektionsleitblechen ergibt sich ein zusätzlicher Wärmeeffekt mit resultierender zusätzlicher Energieeinsparung.

Die Erfindung ermöglicht erstmalig den Einsatz eines Heizkörpers mit derart niedrigen Vorlauftemperaturen, dass ein Betrieb mit Wärmepumpen und zum Beispiel in Kombination mit einer Fußbodenheizung ermöglicht wird und in der Übergangszeit mit milden Außentemperaturen (circa 5 Grad Celsius - 15 Grad Celsius) eine Energieeinsparung um bis zu 40% ermöglicht.

Anhand der Figuren wird ein Ausführungsbeispiel der Erfindung näher erläutert. Es zeigen:
- Figur 1: eine perspektivische Ansicht mit verdeckten Linien,

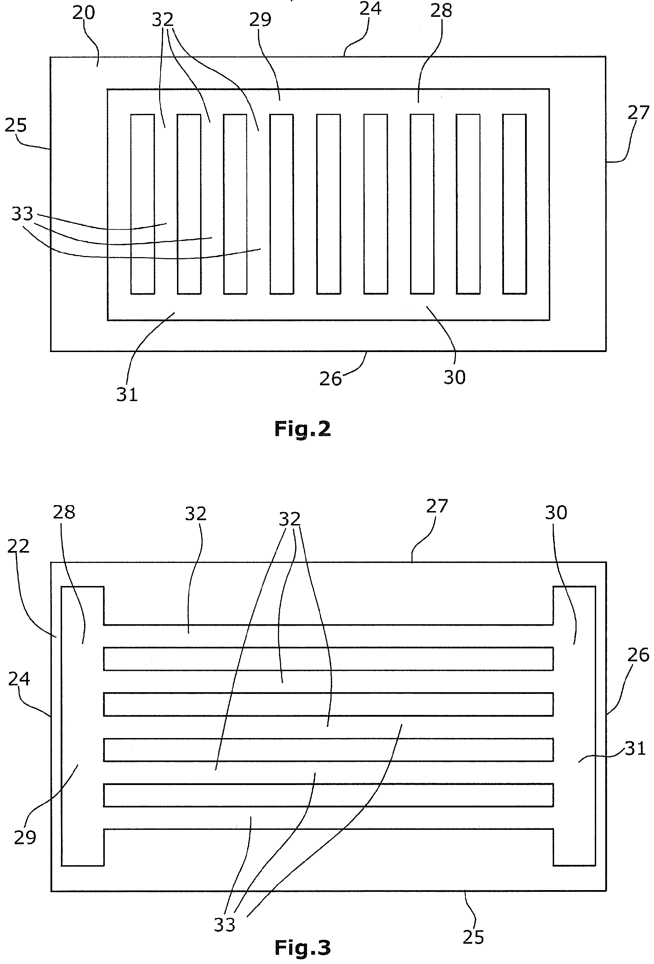

- Figur 2: eine Ansicht aus Richtung des Pfeils II in Figur 1 und
- Figur 3: eine Rückansicht aus Richtung des Pfeils III in Figur 1.

Die Heizkörpervorrichtung 10 weist zwei flächige, parallel zueinander angeordnete Heizelemente 12, 14 auf. Beide Heizelemente 12, 14 sind jeweils in einer Vertikalebene angeordnet. Das erste Heizelement 12 bildet die Vorderseite des Heizkörpers 10 und das zweite Heizelement 14 bildet die Rückseite des Heizkörpers 10. Die Vorderseite ist dem zu beheizenden Raum zugewandt, während die Rückseite des Heizkörpers 10 einer Raumwand zugewandt ist. Die beiden Heizelemente 12, 14 sind mit einem Vorlaufanschluss 16 und mit einem Rücklaufanschluss 18 verbunden. Der Vorlaufanschluss 16 ist im Betrieb der Heizkörpervorrichtung 10 mit dem Heizungsvorlauf verbunden. Der Rücklaufanschluss 18 ist im Betrieb der Heizkörpervorrichtung 10 mit dem Heizungsrücklauf verbunden.

Jedes der beiden Heizelemente 12, 14 ist aus einer ersten Halbschale 20 und einer zweiten Halbschale 22 gebildet. Jede der beiden Halbschalen 20, 22 wird aus einem Metallblech gepresst, wobei jeweils langgestreckte, Rillen bildende Vertiefungen hergestellt werden. Entlang einander gegenüberliegender Ränder 24, 26 sind in beiden Halbschalen jeweils eine erste und eine zweite langgestreckte Vertiefung 28, 30 ausgebildet. Die beiden Vertiefungen 28, 30 sind jeweils durch mehrere, langgestreckte und parallel zueinander verlaufende dritte Vertiefungen 32 miteinander verbunden. Die dritten Vertiefungen 32 jeder Halbschale 20, 22 sind quer zu den ersten und zweiten Vertiefungen 28, 30 der betreffenden Halbschale angeordnet. Die ersten Vertiefungen 28 jeder Halbschale bilden eine Vorlauf-Wassertasche und sind mit einem gemeinsamen Vorlaufanschluss 16 verbunden, über den den Vorlauf-Wassertaschen 29 Heizmedium aus dem Heizungsvorlauf zugeführt wird. Aus der Vorlauf-Wassertasche 29 strömt das Heizmedium in von den dritten Vertiefungen 32 gebildete Strömungskanäle 33 und wird der von der zweiten Vertiefung 30 gebildeten Rücklauf-Wassertasche 31 zugeführt. Die beiden Rücklauf-Wassertaschen 31 der beiden Halbschalen 20, 22 sind mit einem gemeinsamen Rücklaufanschluss 18 verbunden, über den das Heizmedium aus den Rücklauf-Wassertaschen 31 dem Heizungsrücklauf zugeführt wird.

Die Halbschalen 20, 22 sind derart um 90 Grad zueinander verdreht angeordnet, dass die Vertiefungen 28, 30, 32 der ersten Halbschale 20 quer zu den entsprechenden Vertiefungen 28, 30, 32 der zweiten Halbschale 22 angeordnet sind. Die durch die dritten Vertiefungen 32 gebildeten Strömungskanäle 33 der ersten Halbschale 20 sind vertikal ausgerichtet, während die entsprechenden Strömungskanäle 33 der zweiten Halbschale 22 horizontal ausgerichtet sind. Die Strömungskanäle 33 der beiden Halbschalen 20, 22 sind somit im miteinander verbundenen Zustand der Halbschalen 20, 22 nach Art eines Gitters einander kreuzend angeordnet. In den Kreuzungspunkten 36 vermischt sich das die Strömungskanäle 33 der ersten Halbschale 20 durchströmende Heizmedium mit dem die Strömungskanäle 33 der zweiten Halbschale 22 durchströmenden Heizmedium. Die Strömungskanäle 33 der ersten Halbschale 20 werden vertikal von oben nach unten durchströmt, während die Strömungskanäle 33 der zweiten Halbschale 22 in Horizontalrichtung je nach Blickrichtung von links nach rechts beziehungsweise von rechts nach links durchströmt werden.

Die Kreuzungspunkte 36 sind über einen Großteil der Oberfläche der Heizelemente 12, 14 verteilt angeordnet, wodurch sich eine gleichmäßige Wärmeverteilung beim Durchströmen mit Heizmedium ergibt. Entlang der äußeren Ränder sowie in den an die Kreuzungspunkte 36 angrenzenden Berührungsflächen 38 berühren die beiden Halbschalen 20, 22 einander und sind in diesen Bereichen fest miteinander, zum Beispiel durch Schweißen, verbunden.

Das Thermostatventil 40 zum temperaturabhängigen Öffnen oder Schließen der Zufuhr von Heizmedium aus dem Heizungsvorlauf und der Vorlaufanschluss 16 sind nicht auf Höhe der oberen Wassertasche 28 im Bereich des oberen Randes 24, 27 der Heizelemente 12, 14 angeordnet, sondern auf einer Höhe unterhalb der oberen Wassertasche 28. Das Thermostatventil 40 und der Vorlaufanschluss 16 sind ungefähr auf halber Höhe zwischen der Wassertasche 28 und dem Rücklaufanschluss 18 angeordnet und mit einer seitlichen Wassertasche 30 verbunden. Dadurch ist vermieden, dass im Falle des Einbaus der Heizkörpervorrichtung 10 in eine Wandnische ein Wärmestau die Schalttätigkeit des Termostatventils verfälscht. Das Thermostatventil 40 ist eine in den Heizkörper 10 integrierte Ventilgarnitur.

Bei einem anderen, in den Figuren nicht dargestellten Ausführungsbeispiel weisen die beiden inneren, einander zugewandten Halbschalen 20, 22 der Heizkörpervorrichtung 10 die vertikalen Strömungskanäle 33 auf, während die beiden äußeren, dem Raum beziehungsweise der Raumwand zugeordneten Halbschalen 22, 20 die horizontalen Strömungskanäle 33 aufweisen. Dadurch entsteht ein optisch besonders gefälliger Eindruck der Heizkörpervorrichtung 10. Die vertikalen Strömungskanäle 33 der inneren Halbschalen 20, 22 sind durch Konvektionsleitbleche aus thermisch leitendem Material thermisch miteinander verbunden, um einen Konvektionsluftstrom im Inneren der Heizkörpervorrichtung 10 zu erzielen.

In den Figuren ist lediglich ein Ausführungsbeispiel dargestellt, das den Gegenstand der Erfindung nicht einschränkt.

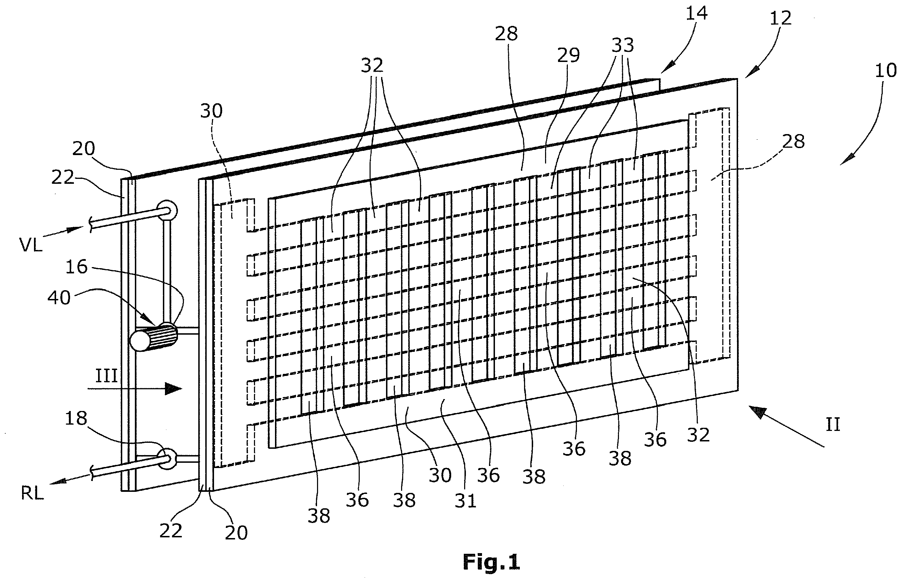

Bei dem Ausführungsbeispiel in Figur 1 erfolgt ein seitlicher Anschluss an wandseitig vorgesehene Vorlauf- und Rücklaufanschlüsse. Es ist eine Variante denkbar, bei der der Vorlaufanschluss 16 des Heizkörpers 10 und die Ventilgarnitur des Thermostatventils 40 nicht auf halber Höhe mit den Heizelementen 12, 14 verbunden ist, sondern nach Art eines herkömmlichen Kompaktheizkörpers auf Höhe des wandseitigen Vorlaufanschlusses. Weiterhin kann die erfindungsgemäße Heizkörpervorrichtung 10 auch nach Art eines herkömmlichen Ventilheizkörpers mit bodenseitigen Anschlüssen für Vorlauf- und Rücklauf verbunden werden. Vom heizkörperseitigen Rücklaufanschluss 18 erfolgt dann die Verbindung mit dem Rücklauf vertikal nach unten und nicht, wie in Figur 1 dargestellt, horizontal zur Seite. Die Verbindung zwischen dem heizkörperseitigen Vorlaufanschluss 16 erfolgt mit dem bodenseitigen Vorlauf über ein zwischen den Heizelementen 12, 14 vertikal nach unten geführtes Verbindungsrohr. Diese Variante ist zwar in den Figuren nicht dargestellt, erfindungsgemäß jedoch in gleicher Weise ermöglicht.

## Patentansprüche

1. Heizkörpervorrichtung (10) mit mindestens einem Heizelement (12, 14), welches zwei gegeneinander gesetzte Heizelement-Halbschalen (20, 22) aufweist, wobei jede Halbschale mehrere, langgestreckte, parallel zueinander angeordnete, Rillen bildende Vertiefungen (32) aufweist,
wobei die rillenartigen Vertiefungen (32) der einen Halbschale (20) derart quer zu den rillenartigen Vertiefungen (32) der anderen Halbschale (22) angeordnet sind, dass die rillenartigen Vertiefungen (32) beider Halbschalen (20, 22) einander kreuzende und das Heizelement nach Art eines Gitters durchziehende Strömungskanäle (33) für das Heizmedium bilden, und
dass jede Halbschale (20, 22) mindestens eine eine Wassertasche (29, 31) für das Heizmedium bildende rillenartige Vertiefung (28, 30) aufweist, **dadurch gekennzeichnet, dass** die Vertiefung (28, 30) quer zu den Strömungskanälen (33) der Halbschale angeordnet ist, wobei jeder der Wassertaschen (29, 31) mit einem Anschluss (16, 18) für den Heizungsvorlauf oder Heizungsrücklauf und mit den Strömungskanälen (33) der Halbschale verbunden ist.

2. Heizkörpervorrichtung nach Anspruch 1, **dadurch gekennzeichnet, dass** die Strömungskanäle (33) der einen Halbschale (20) vertikal und die Strömungskanäle (33) der anderen Halbschale (22) horizontal ausgerichtet sind.

3. Heizkörpervorrichtung nach einem der vorhergehenden Ansprüche, **dadurch gekennzeichnet, dass** die Rillen derart ausgebildet sind, dass durch die Strömungskanäle (33) der einen Halbschale (20) strömendes Heizmedium sich mit dem durch die Strömungskanäle (33) der anderen Halbschale (22) strömenden Heizmedium in den Kreuzungspunkten (36) der Strömungskanäle (33) vermischt.

4. Heizkörpervorrichtung nach einem der Ansprüche 1 - 3, **dadurch gekennzeichnet, dass** jede Halbschale auf einander gegenüberliegenden Seiten jeweils eine die Wassertasche (29, 31) bildende rillenartige Vertiefung (28, 30) aufweist, so dass eine Wassertasche (29) für den Heizungsvorlauf und die andere Wassertasche (31) für den Heizungsrücklauf gebildet ist.

5. Heizkörpervorrichtung nach einem der Ansprüche 1 - 4, **dadurch gekennzeichnet, dass** eine Wassertasche (29, 31) der einen Halbschale (20) und eine Wassertasche (29, 31) der anderen Halbschale (22) einen gemeinsamen Anschluss für den Heizungsvorlauf oder den Heizungsrücklauf aufweisen.

6. Heizkörpervorrichtung nach einem der vorhergehenden Ansprüche, **dadurch gekennzeichnet, dass** ein Thermostatventil (40) zum temperaturabhängigen Öffnen oder Schließen der Zufuhr von Heizmedium aus dem Heizungsvorlauf auf einer Höhe unterhalb des oberen Randes (24, 27) der Heizkörpervorrichtung und unterhalb des Vorlaufanschlusses (16) der Heizkörpervorrichtung angeordnet ist.

7. Heizkörpervorrichtung nach dem vorhergehenden Anspruch, **dadurch gekennzeichnet, dass** die Heizkörpervorrichtung eine obere, mit dem Heizungsvorlauf verbundene Wassertasche (29) und eine untere, mit dem Heizungsrücklauf verbundene Wassertasche (31) aufweist, wobei das Thermostatventil (40) auf einer Höhe von etwa 40% - 60% der Höhendifferenz zwischen der oberen und unteren Wassertasche angeordnet ist.

8. Verfahren zum Herstellen einer Heizkörpervorrichtung (10) nach einem der vorhergehenden Ansprüche mit mindestens einem Heizelement (12, 14), welches aus zwei gegeneinander gesetzten Heizelement-Halbschalen (20, 22) gebildet wird, wobei jede Halbschale (20, 22) mehrere, langgestreckte, parallel zueinander angeordnete, Rillen bildende Vertiefungen (32) aufweist,
**dadurch gekennzeichnet,**
**dass** die beiden Halbschalen (20, 22) derart gegeneinander verdreht aneinander gesetzt und miteinander fest verbunden werden, dass die rillenartigen Vertiefungen (32) der einen Halbschale Strömungskanäle (33) für das Heizmedium bilden, die quer zu den Strömungskanälen (33), die von den rillenartigen Vertiefungen (32) der anderen Halbschale (22) gebildet werden, verlaufen, so dass das Heizelement (12, 14) im zusammengefügten Zustand der Halbschalen (20, 22) einander kreuzende und das Heizelement nach Art eines Gitters durchziehende Strömungskanäle (33) aufweist, und dass jede Halbschale (20, 22) mindestens eine eine Wassertasche (29, 31) für das Heizmedium bildende rillenartige und quer zu den Strömungskanälen (33) der Halbschale angeordnete Vertiefung (28, 30) aufweist, wobei die Wassertasche (29, 31) mit einem Anschluss (16, 18) für den Heizungsvorlauf oder Heizungsrücklauf und mit den Strömungskanälen (33) der Halbschale verbunden ist.

## Claims

1. A radiator device (10) comprising at least one heating element (12, 14) having two heating element half shells (20, 22) being placed against each other, wherein each half shell comprises several recesses (32) which are elongated, arranged parallel to each other and form a groove,
wherein
the groove-live recesses (32) of the one half shell (20) are arranged transversely to the groove-like recesses (32) of the other half shell (22) such that the groove-like recesses (32) of both half shells (20, 22) form flow channels (33) for the heating medium which cross each other and pass through the heating element in the manner of a grid, and
that each half shell (20, 22) comprises at least one groove-like recess (28, 30) forming a water pocket (29, 31) for the heating medium, **characterized in that** the recess (28, 30) is arranged transversely to the flow channels (33) of the half shell, wherein each of the water pockets (29, 31) is connected to a connection (16, 18) for the heater flow or heater return and to the flow channels (33) of the half shell.

2. The radiator device according to claim 1, **characterized in that** the flow channels (33) of the one half shell (20) are aligned vertically and the flow channels (33) of the other half shell (22) are aligned horizontally.

3. The radiator device according to one of the preceding claims, **characterized in that** the grooves are formed such that heating medium flowing through the flow channels (33) of the one half shell (20) mixes at the intersection points (36) of the flow channels (33) with the heating medium flowing through the flow channels (33) of the other half shell (22).

4. The radiator device according to one of claims 1-3, **characterized in that** each half-shell comprises on opposite sides respectively one groove-like recess (28, 30) forming the water pocket (29, 31) such that one water pocket (29) is formed for the heater flow and the other water pocket (31) is formed for the heater return.

5. The radiator device according to one of claims 1-4, **characterized in that** a water pocket (29, 31) of the one half shell (20) and a water pocket (29, 31) of the other half shell (22) have a common connection for the heater flow or the heater return.

6. The radiator device according to one of the preceding claims, **characterized in that** a thermostatic valve (40) is arranged for temperature-dependent opening or closing of the supply of heating medium from the heater flow at a height below the upper edge (24, 27) of the radiator device and below the flow connection (16) of the radiator device.

7. The radiator device according to one of the preceding claims, **characterized in that** the radiator device comprises an upper water pocket (29) being connected to the heater flow and a lower water pocket (31) being connected to the heater return, wherein the thermostatic valve (40) is arranged at a height of about 40%-60% of the height difference between the upper and the lower water pocket.

8. A method for manufacturing a radiator device (10) according to one of the preceding claims, comprising at least one heating element (12, 14) being formed of two heating element half shells being placed against each other, wherein each half shell (20, 22) comprises several recesses (32) which are elongated, arranged parallel to each other and form a groove,
**characterized in that**,
the two half shells (20, 22) are placed twisted against each other and firmly connected to each other such that die groove-like recesses (32) of the one half shell form flow channels (33) for the heating medium which run transversely to the flow channels (33) being formed by the groove-like recesses (32) of the other half shell (22) such that in a jointed state of the half shells the heating element (12, 14) comprises flow channels (33) which cross each other and pass through the heating element in the manner of a grid, and that each half shell (20, 22) comprises at least one groove-like recess (28, 30) forming a water pocket (29, 31) for the heating medium and being arranged transversely to the flow channels (33) of the half shells, wherein the water pocket (29, 31) is connected to a connection (16, 18) for the heater flow or heater return and to the flow channels (33) of the half shell.

## Revendications

1. Dispositif de chauffage (10) comprenant au moins un élément chauffant (12, 14) qui comporte deux demi-coques d'élément chauffant (20, 22) placées l'une contre l'autre, chaque demi-coque comportant une pluralité de creux allongés (32) qui sont disposés parallèlement les uns aux autres et qui forment des rainures,
les creux (32) de type rainures d'une demi-coque (20) étant disposés transversalement aux creux (32) de type rainures de l'autre demi-coque (22) de telle sorte que les creux (32) de type rainures des deux demi-coques (20, 22) forment des conduits d'écoulement (33) qui se croisent et sont ménagés dans l'élément chauffant à la manière d'une grille et qui sont destinés au milieu chauffant, et
chaque demi-coque (20, 22) comporte au moins un creux (28, 30) de type rainure qui forme une poche d'eau (29, 31) destiné au milieu chauffant, **caractérisée en ce que** le creux (28, 30) est ménagé transversalement aux conduits d'écoulement (33) de la demi-coque, chacune des poches d'eau (29, 31) étant reliée à un raccord (16, 18), destiné à la colonne de chauffage montante ou à la colonne de chauffage de retour, et aux conduits d'écoulement (33) de la demi-coque.

2. Dispositif de chauffage selon la revendication 1, **caractérisé en ce que** les conduits d'écoulement (33) d'une demi-coque (20) sont orientés verticalement et les conduits d'écoulement (33) de l'autre demi-coque (22) sont orientés horizontalement.

3. Dispositif de chauffage selon l'une des revendications précédentes, **caractérisé en ce que** les rainures sont formées de manière à ce que le milieu chauffant circulant à travers les conduits d'écoulement (33) de l'une des demi-coques (20) se mélange avec le milieu chauffant s'écoulant à travers les conduits d'écoulement (33) de l'autre demi-coque (22) aux points d'intersection (36) des conduits d'écoulement (33).

4. Dispositif de chauffage selon l'une des revendications 1 à 3, **caractérisé en ce que** chaque demi-coque comporte, sur des côtés opposés, un creux (28, 30) de type rainure formant une poche d'eau (29, 31) de sorte qu'une poche d'eau (29) est formée pour la colonne de chauffage montante et l'autre poche d'eau (31) est formée pour la colonne de chauffage de retour.

5. Dispositif de chauffage selon l'une des revendications 1 à 4, **caractérisé en ce qu'**une poche d'eau (29, 31) d'une demi-coque (20) et une poche d'eau (29, 31) de l'autre demi-coque (22) comportent un raccord commun pour la colonne de chauffage montant ou la colonne de chauffage de retour.

6. Dispositif de chauffage selon l'une des revendications précédentes, **caractérisé en ce qu'**une soupape thermostatique (40) est disposée à une hauteur située sous le bord supérieur (24, 27) du dispositif de chauffage et sous le raccord de colonne montante (16) du dispositif de chauffage pour ouvrir ou fermer l'alimentation de la colonne de chauffage montante en milieu chauffant en fonction de la température.

7. Dispositif de chauffage selon la revendication précédente, **caractérisé en ce que** le dispositif de chauffage comporte une poche d'eau supérieure (29) reliée à la colonne de chauffage montante et une poche d'eau inférieure (31) reliée à la colonne de chauffage de retour, la soupape thermostatique (40) étant disposée à une hauteur d'environ 40 % à 60 % de la différence de hauteur entre les poches d'eau supérieure et inférieure.

8. Procédé de fabrication d'un dispositif de chauffage (10) selon l'une des revendications précédentes comprenant au moins un élément chauffant (12, 14) qui est formé de deux demi-coques d'éléments chauffants (20, 22) placées l'une contre l'autre, chaque demi-coque (20, 22) comportant une pluralité de creux allongés (32) qui sont disposés parallèlement les uns aux autres et qui forment des rainures,
**caractérisé en ce que**
les deux demi-coques (20, 22) sont placées l'une contre l'autre de manière à être entraînées en rotation l'une par rapport à l'autre et sont reliées l'une à l'autre de manière fixe de telle sorte que les creux (32) de type rainures de la demi-coque forment des conduits d'écoulement (33), destinés au milieu chauffant, lesquels s'étendent transversalement aux conduits d'écoulement (33) qui sont formés par les creux (32) de type rainures de l'autre demi-coque (22) de sorte que, lorsque les demi-coques (20, 22) sont montées, l'élément chauffant (12, 14) comporte des conduits d'écoulement (33) qui se croisent à la manière d'une grille et qui sont traversés par l'élément chauffant et **en ce que** chaque demi-coque (20, 22) comporte au moins un creux (28, 30) de type rainure qui forme une poche d'eau (29, 31) destinée au milieu chauffant et qui est disposée transversalement aux conduits d'écoulement (33) de la demi-coque, la poche d'eau (29, 31) étant reliée à un raccord (16, 18), destiné à la colonne de chauffage montante ou à la colonne de chauffage de retour, et aux conduits d'écoulement (33) de la demi-coque.
